## Europäisches Patentamt
## European Patent Office
## Office européen des brevets

(19)

(11) Veröffentlichungsnummer: **0 009 177**
**B1**

(12)

# EUROPÄISCHE PATENTSCHRIFT

(45) Veröffentlichungstag der Patentschrift:
10.02.82

(51) Int. Cl.³: **C 01 B 25/06**

(21) Anmeldenummer: **79103294.9**

(22) Anmeldetag: **05.09.79**

(54) Verfahren zur kontinuierlichen Herstellung von Phosphan.

(30) Priorität: **15.09.78 DE 2840147**

(43) Veröffentlichungstag der Anmeldung:
**02.04.80 Patentblatt 80/7**

(45) Bekanntmachung des Hinweises auf die Patenterteilung:
**10.02.82 Patentblatt 82/6**

(84) Benannte Vertragsstaaten:
**BE CH DE FR GB IT NL**

(56) Entgegenhaltungen:
**DE-A1-2 632 316**
**US-A-2 977 192**

(73) Patentinhaber: **HOECHST Aktiengesellschaft, WERK KNAPSACK, D-5030 Hürth (DE)**

(72) Erfinder: **Elsner, Georg, Dr., Dr. Krauss-Strasse 5, D-5030 Hürth-Knapsack (DE)**
Erfinder: **Klose, Werner, Dr., Grachtstrasse 14, D-5042 Erftstadt (DE)**
Erfinder: **May, Christian, Berliner Strasse 1, D-5042 Erftstadt (DE)**
Erfinder: **Heymer, Gero, Dr., Fasanenaue 12, D-5042 Erftstadt (DE)**

## Verfahren zur kontinuierlichen Herstellung von Phosphan

Die vorliegende Erfindung betrifft ein Verfahren zur Herstellung eines kontinuierlichen Stromes von hochkonzentriertem Phosphan (Phosphorwasserstoff), indem man in einer Reaktionszone unter Rühren ein Gemisch umsetzt, welches elementaren, gelben Phosphor, eine wässrige Alkalihydroxidlösung und mindestens einen Alkohol enthält, der 5 oder mehr C-Atome aufweist. Die gasförmigen Reaktionsprodukte, welche das Phosphan enthalten, fängt man auf, trennt den Reaktionsrückstand in eine wässrige sowie eine alkoholische Phase und führt die alkoholische Phase in die Reaktionszone zurück.

Bei einer solchen Arbeitsweise, wie sie z.B. in DE 2 632 316 beschrieben ist, hat sich gezeigt, dass sich das Mengenverhältnis von $PH_3/H_2$ im gasförmigen Reaktionsprodukt verringert, wenn der als Reaktionsmedium benutzte und rezirkulierte Alkohol nicht sorgfältig gereinigt wurde, was beispielsweise erst durch mehrwöchiges Absitzenlassen des emulgierten Wassers erreicht wird.

Ferner wurde festgestellt, dass bei Abweichungen von den stöchiometrischen Mengenverhältnissen der Ausgangsprodukte, insbesondere aber in Anwesenheit von überschüssigem Wasser, das beispielsweise mit dem im Kreislauf geführten Alkohol in die Reaktionszone gelangt, die entstehende Salzsuspension im Reaktor zusammenklumpt und nicht mehr gefördert werden kann, wodurch ein häufiges Abstellen der Anlage und aufwendige Reinigungen erforderlich werden.

Überraschenderweise wurde nun gefunden, dass sich die bekannte Arbeitsweise erheblich verbessern lässt, wenn man dem Reaktionsgemisch, bezogen auf den eingesetzten Alkohol, 0,01 bis 2, vorzugsweise 0,1 bis 0,4 Gew.-% eines oberflächenaktiven Stoffes zusetzt, berechnet als reine aktive Substanz.

Hierzu sind die bekannten oberflächenaktiven Stoffe geeignet, wie solche nichtionischer, kationischer oder anionischer Natur.

Zu diesen zählen in erster Linie:
exthoxylierte Alkohole mit 4 bis 22 C-Atomen, Alkylphenole mit 8 bis 12 C-Atomen im Alkylrest, die Phosphorsäuremono- oder -diester dieser Alkohole bzw. Phenole, Ammoniumsalze, die mindestens eine Alkylgruppe mit 12 bis 18 C-Atomen enthalten, sowie Äthersulfate von Alkanolen, Alkylbenzolsulfonate, Alkenylsulfonate oder die Natriumsalze dieser Verbindungen, welche in den Alkyl- oder Alkenylgruppen 8 bis 18 C-Atome aufweisen.

Durch die erfindungsgemässe Arbeitsweise werden u.a. folgende Vorteile erzielt:

a) der Transport der entstehenden Salzsuspension geht ohne Störungen vor sich,

b) die Trennung von Alkohol und wässriger Phase nach der Umsetzung sowie die Wiederverwendbarkeit des abgetrennten Alkohols werden erleichtert,

c) auch bei grösseren Abweichungen von den stöchiometrischen Verhältnissen der Ausgangsprodukte bleibt die $PH_3$-Konzentration im gasförmigen Reaktionsprodukt ausreichend hoch,

d) Erhöhung der Konzentration des $PH_3$ im Gasstrom und Ausbeutesteigerung.

Die Vorteile der erfindungsgemässen Arbeitsweise gegenüber bekannten Verfahren werden durch die nachfolgenden Beispiele veranschaulicht.

Beispiele 1 - 21

Verwendet wird eine Apparatur bestehend aus einem 2,5-Liter-Doppelmantel-Glasreaktor mit Rührer, Thermometerstutzen, Stickstoffspülung, geheiztem Phosphor- sowie Natronlaugeeinleitungsrohr, Alkoholeinleitungsrohr, Gasableitungsrohr und Bodenablassventil für die Reaktionslösung.

In dieser Apparatur werden gelber elementarer Phosphor und 70%ige Natronlauge unter Rühren zur Reaktion gebracht. Als Dispergierhilfsmittel und Reaktionsmedium dient ein Gemisch aus n-Octanol und n-Decanol im Gewichtsverhältnis 1 : 1, das entweder als solches oder mit einem Zusatz von 0,1 Gewichtsprozent des jeweils verwendeten oberflächenaktiven Stoffes eingesetzt wird. Die Ausbeute an Phosphorwasserstoff und dessen Konzentration im entstehenden Gas, sowie die Art des zugesetzten oberflächenaktiven Stoffes, sind in der nachstehenden Tabelle aufgeführt.

Tabelle 1

| Beispiel Nr. | Oberflächenaktive Substanz | Vol.% $PH_3$ im Gas | % P als $PH_3$ / P eingesetzt |
|---|---|---|---|
| 1 | kein Zusatz | 91,0 | 28,8 |
| 2 | Addukt von 6 Molen Ethylenoxid (EO) an Nonylphenol | 94,0 | 29,0 |
| 3 | Addukt von 10 Molen EO an Nonylphenol | 93,6 | 31,2 |
| 4 | Addukt von 6 Molen EO an 1 Mol eines Gemisches linearer Alkanole mit 12-15 C-Atomen | 92,1 | 30,9 |

Tabelle 1 (Fortsetzung)

| Beispiel Nr. | Oberflächenaktive Substanz | Vol.% PH₃ im Gas | % P als PH₃ P eingesetzt |
|---|---|---|---|
| 5 | Addukt von 5 Molen EO an 1 Mol eines Gemisches von Alkanolen mit 16-20 C-Atomen | 93,0 | 31,4 |
| 6 | Na-Salz von Alkenylsulfonsäuren mit 14-17 C-Atomen | 91,5 | 30,2 |
| 7 | $C_{12}H_{25}-(OCH_2-CH_2)_n SO_4^- Na^+$ <br> n = 2 bis 5 | 93,0 | 29,9 |
| 8 | Na-Salz der Dodecylbenzolsulfonsäure | 92,4 | 29,8 |
| 9 | Ein ca. äquimolares Gemisch von Phosphorsäuremono- und -diester eines Adduktes von 4 Molen EO an 1 Mol n-Dodecanol | 92,5 | 29,0 |
| 10 | Ein ca. äquimolares Gemisch von Phosphorsäuremono- und -diester eines Adduktes von 6 Molen EO an 1 Mol Nonylphenol | 94,3 | 32,1 |
| 11 | Ein ca. äquimolares Gemisch von Phosphorsäuremono- und -di-2-butoxyethylester | 94,0 | 29,8 |
| 12 | Ein ca. äquimolares Gemisch von Phosphorsäuremono- und -diester eines Adduktes von 2 Molen EO an 1 Mol eines technischen Fettalkoholgemisches der Kettenlängen $C_{14}-C_{20}$ | 94,7 | 32,2 |
| 13 | Addukt von 4 Molen EO an 1 Mol n-Dodecanol | 93,0 | 31,5 |
| 14 | Ein ca. äquimolares Gemisch an Phosphorsäuremono- und -diester eines Adduktes von 4 Molen EO an 1 Mol Nonylphenol | 94,4 | 30,7 |
| 15 | wie Beispiel 14, jedoch mit 8 Molen EO | 94,2 | 31,2 |
| 16 | wie Beispiel 14, jedoch mit 15 Molen EO | 94,0 | 32,1 |
| 17 | wie Beispiel 14, jedoch mit 10 Molen EO | 93,8 | 32,1 |
| 18 | wie Beispiel 14, jedoch mit 23 Molen EO | 93,0 | 30,7 |
| 19 | $(CH_3)_2N(C_{12}H_{25})_2^+ Cl^-$ | 93,0 | 31,5 |
| 20 | $C_{12}H_{25}N(CH_3)_2(CH_2-C_6H_5)^+ Cl^-$ | 92,8 | 30,9 |

Beispiele 21 - 29

In einer halbtechnischen Anlage, bestehend aus zwei 50-Liter-Doppelmantel-Glasgefässen mit Rührer, Rückflusskühler und Bodenablassventil sowie verschiedenen Dosierorganen zur Eindosierung der Reaktanden, wird Phosphorwasserstoff erzeugt durch Umsetzung von elementarem gelbem Phosphor mit 70%iger Natronlauge in einem Alkoholgemisch, welches aus 35% n-Pentanol, 15% 2-Methyl-butanol, 25% n-Octanol und 25% n-Decanol besteht, das zusätzlich mit einem der vorstehenden oberflächenaktiven Stoffe derart versetzt wurde, dass eine etwa 0,1%ige Lösung existiert. Phosphor, Natronlauge und Alkoholgemisch werden im Volumenverhältnis von 1 : 1,4 : 12 kontinuierlich in das erste Gefäss eindosiert. Dabei entsteht ein gleichmässiger Strom von Phosphorwasserstoff, der nach Kühlung und Reinigung über Aktivkohlefilter qualitativ und quantitativ erfasst wird.

Die im ersten Reaktor nicht gänzlich ausreagierte Dispersion, die noch elementaren Phosphor neben Phosphit und Hypophosphit enthält, wird diskontinuierlich in den zweiten Reaktor abgelassen, wo sie mit weiterer Natronlauge derart versetzt wird, dass eine hellgraue bis hellbeige Dispersion entsteht, die keinen elementaren Phosphor mehr enthält. Das entstehende Gas, welches im wesentlichen aus Wasserstoff mit wechselnden Mengen Phosphorwasserstoff besteht, kann entweder weiter umgesetzt oder verbrannt werden. Die Salzdispersion, die im wesentlichen Natriumphosphit $Na_2HPO_3$ enthält, wird diskontinuierlich in einem Rührbehälter abgelassen, mit soviel Wasser versetzt, dass die Salze gerade gelöst werden, die entstehende Emulsion in ein Phasentrenngefäss gegeben und Alkoholgemisch und wässrige Phase voneinander getrennt.

Die Ergebnisse und Versuchsparameter sind, soweit für die erfindungsgemässe Arbeitsweise relevant, in der nachstehenden Tabelle aufgeführt.

Tabelle 2

| Beispiel Nr. | NaOH 70% (l/h) | Vol.% PH₃ im Gas | PH₃ Ausbeute (%) | Zusatz Tensid | NaOH 2. Reaktor (l/h) | Bemerkungen |
|---|---|---|---|---|---|---|
| 21 | 2,8 | 90 | 28,8 | kein | 2,3 | Ablauf störungsfrei, jedoch trüber Alkohol |
| 22 | 2,4 | 91 | 26,7 | kein | 2,9 | viskose Dispersion im ersten Reaktor, langsamer Ablauf, Zusammenklumpen der Salze und schlechter Ablauf aus zweitem Reaktor, gasender Schlamm in Trenngefäss |
| 23 | 3,0 | 87 | 28,0 | kein | 2,1 | Ablauf aus 1. Reaktor verstopft, nach zwei Stunden Versuchsdauer Abbruch |
| 24 | 2,8 | 94 | 34,0 | 0,1% wie Beispiel 17 | 2,4 | störungsfrei, klarer Alkohol, wenig Schlamm |
| 25 | 2,4 | 94 | 31,0 | 0,1% wie Beispiel 17 | 3,0 | wie vor |
| 26 | 3,0 | 91 | 32,0 | 0,1% wie Beispiel 17 | 2,0 | störungsfrei, klarer Alkohol, wenig Schlamm |
| 27 | 2,8 | 95 | 33,7 | 0,1% wie Beispiel 10 | 2,3 | wie vor |
| 28 | 2,4 | 93 | 30,5 | 0,1% wie Beispiel 10 | 3,1 | wie vor |
| 29 | 3,0 | 91 | 31,0 | 0,1% wie Beispiel 10 | 1,9 | wie vor |

Phosphormenge bei allen Beispielen: 2 l/h
Alkoholmenge bei allen Beispielen: 24 l/h
Versuchsdauer: 8 h

**Patentansprüche**

1. Verfahren zur kontinuierlichen Herstellung von Phosphan, indem man unter Rühren in einer Reaktionszone ein Reaktionsgemisch umsetzt, welches elementaren, gelben Phosphor, eine wässrige Alkalihydroxidlösung und mindestens einen Alkohol als Reaktionsmedium enthält, der 5 oder mehr C-Atome aufweist, die gasförmigen Reaktionsprodukte, welche das Phosphan enthalten, auffängt, den Reaktionsrückstand in eine wässrige sowie eine alkoholische Phase auftrennt und die alkoholische Phase in die Reaktionszone zurückführt, dadurch gekennzeichnet, dass man dem Reaktionsgemisch, bezogen auf den Alkohol, 0,01 bis 2 Gew.-% eines oberflächenaktiven Stoffes zusetzt, berechnet als reine aktive Substanz.

2. Verfahren nach Anspruch 1, dadurch gekennzeichnet, dass nichtionische oberflächenaktive Stoffe zugesetzt werden.

3. Verfahren nach Anspruch 2, dadurch gekennzeichnet, dass Anlagerungsprodukte von Ethylenoxid an Alkohole mit 4-22 C-Atomen oder an Alkylphenole mit 14-18 C-Atomen zugesetzt werden, die pro Mol Alkohol bzw. Alkylphenol 1-25 Mole Ethylenoxid enthalten.

4. Verfahren nach Anspruch 1, dadurch gekennzeichnet, dass anionische oberflächenaktive Stoffe zugesetzt werden.

5. Verfahren nach Anspruch 4, dadurch gekennzeichnet, dass Phosphorsäuremonoester oder Phosphorsäurediester oder Gemische von Phosphorsäuremono- und diestern von Anlagerungsprodukten von Ethylenoxid an Alkohole mit 4-22 C-Atomen oder an Alkylphenole mit 14-18 C-Atomen mit 1-25 Molen Ethylenoxid pro Mol Alkohol bzw. Alkylphenol zugesetzt werden.

6. Verfahren nach Anspruch 4, dadurch gekennzeichnet, dass Äthersulfate von Alkanolen, Alkylbenzolsulfonate, Alkenylsulfonate oder die Natriumsalze dieser Verbindungen zugesetzt werden, die in den Alkyl- oder Alkanylgruppen 10 bis 18 C-Atome aufweisen.

7. Verfahren nach Anspruch 1, dadurch gekennzeichnet, dass kationische oberflächenaktive Stoffe zugesetzt werden.

8. Verfahren nach Anspruch 7, dadurch gekennzeichnet, dass Ammoniumsalze zugesetzt werden, die mindestens eine Alkylgruppe mit 12 bis 18 C-Atomen enthalten.

9. Verfahren nach einem der Ansprüche 1 bis 8, dadurch gekennzeichnet, dass man dem Reaktionsgemisch 0,1 bis 0,4 Gew.-%, bezogen auf den Alkohol, des oberflächenaktiven Stoffes zusetzt.

## Claims

1. Process for the continuous production of phosphane, wherein a mixture containing elemental yellow phosphorus, an aqueous alkali metal hydroxide solution and at least one alcohol with 5 or more carbon atoms as a reaction medium is reacted with agitation in a reaction zone, the resulting gaseous reaction products with the phosphane therein are collected, the reaction residue is separated into an aqueous phase and alcoholic phase, and the alcoholic phase is recycled to the reaction zone, characterized in that 0.01 to 2 weight%, based on the alcohol, of a surfactant, calculated as pure substance, is added to the reaction mixture.

2. Process as claimed in claim 1, wherein non-ionic surfactants are added.

3. Process as claimed in claim 2, wherein addition products of ethylene oxide with alcohols having 4 to 22 carbon atoms or with alkyl phenols having 14 to 18 carbon atoms are added, the addition product containing 1 to 25 mols of ethylene oxide per mol of alcohol or alkyl phenol.

4. Process as claimed in claim 1, wherein anionic surfactants are added.

5. Process as claimed in claim 4, wherein phosphoric acid monoesters or phosphoric acid diesters or phosphoric acid monoester/diestermixture of addition products of ethylene oxide with alcohols having 4 to 22 carbon atoms or alkyl phenols having 14 to 18 carbon atoms are added, the addition product containing 1 to 25 mols of ethylene oxide per mol of alcohol or alkyl phenol.

6. Process as claimed in claim 4, wherein ether sulfates of alcanols, alkylbenzene sulfonates, alkenylsulfonates or the sodium salts of these compounds containing 10 to 18 carbon atoms in the alkyl or alkanyl group, are added.

7. Process as claimed in claim 1, wherein cationic surfactants are added.

8. Process as claimed in claim 7, wherein ammonium salts containing at least one alkyl group having 12 to 18 carbon atoms are added.

9. Process as claimed in any of claims 1 to 8, wherein 0.1 to 0.4 weight%, based on the alcohol, of surfactant is added to the reaction mixture.

## Revendications

1. Procédé de préparation en continu de phosphine par réaction, avec agitation, dans une zone de réaction, d'un mélange de réaction qui contient du phosphore blanc élémentaire, une solution aqueuse d'hydroxyde alcalin et au moins un alcool en $C_5$ ou plus, les produits de réaction gazeux qui contiennent la phosphine étant recueillis, le résidu de réaction étant séparé en une phase aqueuse et une phase alcoolique et la phase alcoolique étant renvoyée dans la zone de réaction, caractérisé en ce que l'on utilise le mélange de réaction en association avec 0,01 à 2% en poids, par rapport à l'alcool utilisé, d'une substance tensioactive, calculée en substance active pure.

2. Procédé selon la revendication 1, caractérisé en ce que l'on ajoute des substances tensioactives non ioniques.

3. Procédé selon la revendication 2, caractérisé en ce que l'on ajoute des produits d'addition de l'oxyde d'éthylène sur des alcools en $C_4-C_{22}$ ou sur des alkylphénols en $C_{14}-C_{18}$ contenant 1 à 25 moles d'oxyde d'éthylène par mole d'alcool ou d'alkylphénol.

4. Procédé selon la revendication 1, caractérisé en ce que l'on ajoute des substances tensioactives anioniques.

5. Procédé selon la revendication 4, caractérisé en ce que l'on ajoute des mono- ou diesters d'acide phosphorique ou des mélanges de mono- ou diesters phosphoriques de produits de fixation d'oxyde d'éthylène sur des alcools en $C_4-C_{22}$ ou sur des alkylphénols en $C_{14}-C_{18}$ contenant 1 à 25 moles d'oxyde d'éthylène par mole d'alcool ou d'alkylphénol.

6. Procédé selon la revendication 4, caractérisé en ce que l'on ajoute des éthersulfates d'alcanols, des alkylbenzènesulfonates, des alcénylsulfonates ou les sels de sodium de ces composés en $C_{10}-C_{18}$ dans les groupes alkyle ou alkanyle.

7. Procédé selon la revendication 1, caractérisé en ce que l'on ajoute des substances tensioactives cationiques.

8. Procédé selon la revendication 7, caractérisé en ce que l'on ajoute des sels d'ammonium contenant au moins un groupe alkyle en $C_{12}-C_{18}$.

9. Procédé selon l'une des revendications 1 à 8, caractérisé en ce que l'on utilise le mélange de réaction en association avec 0,1 à 0,4% en poids, par rapport à l'alcool, de la substance tensioactive.